# EUROPEAN PATENT SPECIFICATION

(11) **EP 3 839 482 B1**
(45) Date of publication and mention of the grant of the patent: **18.10.2023**
(21) Application number: 20214860.7
(22) Date of filing: 17.12.2020
(51) Int. Cl.: G01N 21/47, G01N 21/55

(54) **METHOD AND DEVICE FOR MEASURING CHARCTERISTICS OF REFELECTION OF LIGHT ON SURFACES**
VERFAHREN UND VORRICHTUNG ZUR MESSUNG DER EIGENSCHAFTEN DER REFLEXION VON LICHT AUF OBERFLÄCHEN
PROCEDE ET DISPOSITIF DE MESURE DES CARACTERISTIQUES DE REFLEXION DE LA LUMIERE SUR DES SURFACES

(30) Priority: 19.12.2019 EE 201900029
(43) Date of publication of application: 23.06.2021
(73) Proprietor: Tallinn University of Technology, 19086 Tallinn (EE)
(72) Inventor: VARJAS, Toivo, 19086 Tallinn (EE); LAANEOTS, Rein, 19086 Tallinn (EE); ROSIN, Argo, 19086 Tallinn (EE)
(74) Representative: Sarap, Margus

(56) References cited:
- CN-A- 103 674 897
- US-A1- 2008 309 942
- US-A1- 2012 307 041
- BOMMEL ET AL: "Road Surfaces and lighting", JOINT TECHNICAL REPORT CIE/PIARC, XX, XX, vol. 66, 1 January 1984 (1984-01-01), XP002258261,

## Description

### Technical field

The invention is within the area of optical electronics and can be used for measuring and assessing of quantities of reflection of light on all kinds of road surfaces, such as the luminance, luminance coefficient, reduced luminance coefficient, colour temperature, chromaticity coordinates of light falling on a road surface and reflecting from the surface.

### Background art

Measurement methods for lighting characteristics are usually intended for the spectre-based measurement of lighting and reflection quantities of the cover surfaces of illuminated objects. Basically, these are the possible measurement procedures for measuring the luminous intensity emitted from the light source, the illuminance of light directed at the measurement object and the luminance of the light reflected from that object, and the measuring instruments appropriate for realising them.

The demand for measuring the quantities of light reflected from the surfaces of objects, including the road surfaces or pavements, such as luminance, luminance coefficient, reduced luminance coefficient, colour temperature and chromaticity coordinates, has risen from the need to apply the obtained measurement results in designing and building road surfaces and the lighting installations belonging to the roads, but also for performing operations in the required lighting simulation programmes. The measurement results obtained are also necessary for updating the standardised luminance coefficient and reduced luminance coefficient values for designing and building road surfaces and lighting installations. Even the lighting quantities of existing roads already in use need to be measured when they are being checked.

The way road surfaces reflect light in the surrounding space is a characteristic quantity of road surfaces which the human eye can detect, and which plays a key part in designing and building road lighting installations. Values characteristic quantities of light reflected from road surfaces are crucial for the functional quality and safety of roads, not only due to mechanical and dynamic performance but also due to the visual perception and night-time safety of all road users.

The properties of current roadway and walkway surfaces and the road materials used to produce them (additives, fillers and binders) have gradually changed. Therefore, the measurements obtained based on the measurement operations used for road surface luminance have a measurement uncertainty of up to 30 % of the measurement result and sometimes even 50 % of the measurement result (Road Surface Photometric Characterisation and Its Impact on Energy Savings. Coatings 2019, 9, 286). Luminous intensity distribution of the new type of light sources, especially the SSL-type light sources, is very sharp, which increases the impact of light characteristic quantities reflected from the surface. Even the current LED technology supports smart road surface lighting and the opportunity to adapt the luminous flux at any time in terms of intensity and direction according to the characteristic quantities of the road surfaces and the luminance requirements. These circumstances require developing new modern measurement methods and mobile measuring instruments in order to design more efficient, more economic and safer road surfaces and road lighting installations.

A significant need has risen to simplify and improve the measurement methods currently used for measuring the characteristic quantities of reflection of light in order to be able to measure on site with a mobile measuring instrument the luminance of the cover surface directly surrounding the measuring point of the measuring grid defined on the cover surface, and other light characteristics reflected from this surface and the diversity of these values, thus reducing measurement capacity and increasing measurement accuracy.

Characteristic quantities of reflection of light on surfaces of objects are measured using the following methods and devices.

The luminance of the surface of road surfaces is primarily measured by standardised measurement methods and devices (EN 13201-3:2015 and EN 13201-4:2015), according to which, road surface luminance is measured at the given points of the measuring field (calculation field) on the road surface defined by the standard. According to this standard, the measuring points of the measuring field defined for measuring the luminance of the surface of a road section are distributed evenly, forming a grid of measuring points. At that, the grid of measuring points must be the same as when measuring the illuminance of the same road section, which occurs before measuring the luminance of the surface. When measuring the luminance of the light reflected from the road surface, the measuring instrument, e.g., a luminance meter, is placed on a tripod, usually at a height of 1.5 m from the road surface and 60 m away from the first (closest) measured points of the grid of measuring points on the measuring field (calculating field) of the road surface in the traffic region being looked at. Measurements in each measuring point can also be taken from a shorter distance, but in that case the extent of the surface of the road probed by the luminance meter around the measuring point and the height of the measuring instrument from the surface of the road must be proportionally smaller. The direction (angle of observation) of the luminance meter itself in relation to the surface normal must be kept within 89° ± 0.5°. In the transverse direction, the luminance meter must in turn be placed at the centre line of the selected measuring field on each lane. The average luminance of the road surface, the general uniformity of luminance and the elevation factor of the luminance threshold is calculated based on the measured values obtained at the measuring points given during the measurement of road section surface luminance. At that, the longitudinal uniformity of the luminance of the road surface is calculated based on the measured values obtained upon measuring the luminance of a road surface with many lanes at the centre line of all lanes.

A disadvantage of this measurement method is that it is very measurement-intensive, expensive and has a relatively low accuracy. When realising the method using all possible types of illuminance and luminance meters, the impact of the location of light sources next to the measuring points and grid outside the given measuring field of the road surface and the light produced by them to the luminance of the road surface must be taken into account. Also, with all used luminance meters, upon measurement the luminance of a random point in the grid of measuring points, the angle between two tangents of the measured road surface cannot be bigger than 2 arcminutes in the vertical position and no bigger than 20 arcminutes in the horizontal position. At the same time, this angle cannot be less than 1 arcminute, which is the normal angle of human visual acuity. To get results for measuring the road surface luminance, luminance coefficient, reduced luminance coefficient, colour temperature and chromaticity coordinates, first, the illuminance of the road surface at each of the measuring points must be measured, which for all kinds of road surfaces is usually in the range of 1 lx to 50 lx. Illuminance is measured by placing a measuring instrument, such as an illuminance meter, at the measuring point of the road surface grid. Thus, with this measurement method, the measured values of illuminance and luminance obtained by measurement at a random point on the grid of measuring points in a measuring field are influenced by momentary properties of road lighting installations, weather and surrounding conditions, and extraneous and obtrusive light. Also, the measured surface of the road may be newly completed, due to which the reflective properties of this surface of the road surface have not stabilised. The reflective properties of this surface of the road surface may not stabilise until a couple of months.

A road traffic sign luminance measurement method and the luminance meters applied for it are known from the document US9,171,360B2, DBI/Cidaut Technologies, LLC, 27.10.2015.

According to this measurement method, road traffic sign surface luminance is measured indirectly based on the difference between two characteristic quantities of the level of reflection of light. Luminance meters are fixed to the front side of the vehicle between the lights. The characteristic quantity of one level of reflection of a road traffic sign surface are fixed based on road surface lighting installations by one luminance meter and the characteristic quantity of the other level of reflection are determined based on the luminous flux coming from the vehicle's lights by the other luminance meter. The difference between the obtained characteristic quantities to the light reflection levels is fixed by an indicating device attached to the vehicle, which has a system for recording the reflection of light, positioning and synchronisation, and which displays the final data from the measurement of road traffic sign luminance.

A disadvantage of this method and the used luminance meters is their relatively high cost. The method and devices are applicable by using a respective moving vehicle. Thereat, the method and the luminance meters used for its implementation only enable measuring the luminance of road traffic signs.

A device for measuring the luminance of the surface of the road surface is known from the document WO2013/133033A1, IWASAKI ELECTRIC CO LTD, 12.09.2013. This device enables measuring luminance around the measuring points (grid points) of the measuring field of the road surface by using a tripod and directing the light from the measurement device with an image capturing unit onto the surface of the road, which is analogous to the above-mentioned standard measuring method. Luminance of a road section is measured at the determined measuring points of a measuring field and is then assessed by image processing. Road surface luminance is measured using the spotlighting of a large number of, e.g., 100, measuring points, which are used for assessing the average luminance. To shorten the measurement time, the target region's image is taken with an imaging device, such as a semiconductor sensor camera, and processed with image processing equipment. Based on the measured values obtained in the given measuring points upon measuring the luminance of the surface of a road section, the average luminance and uniformity of luminance of the target area are calculated in the given grid. The measurement device has a display unit for capturing an image and it displays the measuring range mask, which is located on top of the image captured in the image capturing unit.

A disadvantage of the described measuring device is its high price and relatively low accuracy. For calculating the luminance values, the measuring instrument uses grayscale, and due to its light reflecting characteristics (according to spectral distribution), it cannot be calibrated. The measuring device uses imaging software, which increases measurement capacity and the inaccuracy of measuring. In addition, this measurement device enables measuring the luminance of the surface of road surface illuminated by only certain determined lighting installations and also does that relatively inaccurately, i.e., with an approximately 30% measurement uncertainty from the measurement result.

The method and device used for measurement the surface luminance coefficient and reduced luminance coefficient of measurement objects, including samples of road surfaces prepared from different materials, are known from the document US 2008/309942 A1, Schreder, 18.12.2008. According to this measurement method, a bundle of light rays is directed in an open environment from the light source to the surface of the studied measurement object with a diameter of 113 mm gradually fixed at 0-, 30-, 50- or 70-degree angles from the surface normal of the measurement object. The measured luminance values of the light reflected from this 113 mm diameter surface of the measurement object are fixed by respective sensitive elements based on the horizontal of the surface in the direction of 5, 10, 20, 30, 40, 50, 60, 70 or 80 angular degrees. The measured values fixed by the sensitive elements are the basis for calculating the luminance coefficient and reduced luminance coefficient. As a result, values of light reflected from the surface of the measurement object are obtained, which is a basis for calculating the luminance coefficient and reduced luminance coefficient of the surface of liquids as well as the surface of objects of fibrous material (road surface samples) depending on the angle of incidence of light and the direction of the luminance fixing element in relation to the surface of the measurement object. According to the method, the illuminance of the light directed to the measurement object is in the range of 5,000 lx to 15,000 lx, wherein illuminance is not measured.

The mobile device used for realising the method, which is placed above the measurement object, consists of a curved housing open from below and from the sides. Light source assemblies and sensitive elements fixing luminance have been attached to the surface of the curved housing positioned at an angle. At that, the light source assemblies are fixed at a 0-, 30-, 50- and 70-degree angle from the vertical direction. The luminance fixing sensitive elements used for measuring the reflective characteristics of the 113 mm diameter surface of the illuminated measurement object in an open environment have been fixed in place and are directed to the surface of the measurement object at a 5-, 10-, 20-, 30-, 40-, 50-, 60-, 70- and 80-degree angle from the horizontal.

The described technical solution is the closest solution to the present invention and has thus been taken as a prototype.

The disadvantage of the technical solution is the fact that the method is only intended for determining the luminance coefficient and reduced luminance coefficient of the surface of measurement objects. The measurement method is measurement-intensive (measurement is performed at several different angles directing light and fixing the reflection of light) and does not enable measuring any of the characteristics of lighting reflected from the surface of the road surface which are detectable to the human eye in a vehicle or when walking, as the illuminance of the surfaces of road surfaces is usually between 1 lx and 50 lx. This measurement method is effective in the measurement object surface illuminance range of 5,000 lx to 15,000 lx. The method has a relatively low accuracy level, as upon calculating luminance coefficients, their values are not associated with the measured illuminance of the light falling onto the surface of the measurement object. The light sources used in this technical solution lack spectral definition and the possibility of adjustment. Uncertainty of the luminance values fixed by sensitive elements is unknown. Also, the light directed at the measurement object is diffused and there is no possibility for it to be precisely targeted to a measuring point on the measurement object surface.

### Disclosure of invention

The object of the present invention submitted for protection of the measurement method and device for measuring values characteristic of reflection of light on the surface of the object is to increase universality, decrease measurement capacity and ensure the opportunity for measuring the values of light reflected from the surface of the road surface, with an increase in their measurement accuracy by eliminating the influence of the momentary properties of road lighting installations, weather and surrounding conditions, and extraneous and obtrusive light.

This objective is achieved by the method and device of this invention for measuring the values characteristic of reflection of light on a surface. At that, when using the measurement method, the measurement object is the road surface or pavement such as asphalt, concrete, gravel, composite coverings, etc., and when implementing the method, should the need arise, the first thing to be done, is to check whether the method is adjusted to the measurement conditions for measuring lighting values. For that, the bundle of light rays coming from the calibrated light source without any external influence is directed at an angle to the surface of the sensor of the illuminance meter that is placed at the measuring point on the surface of the road surface, the position of the centre of the sensor surface is aligned with the measuring point on the surface of the road surface, and illuminance, spectral distribution of light and colour temperature are measured. If the measured values show that the measurement conditions are not compatible with the lighting measurement method, the light source luminous flux, the angle of incidence of the bundle of light rays of the light source (direction in relation to the surface of the road) and the distance of the light source are adjusted until the measurement conditions are met, i.e., the method is adjusted for measuring lighting characteristics, and then the values of illuminance of the sensor surface, spectral distribution of light and colour temperature are fixed as reference values. These reference values are necessary, as without them, it is not possible to determine the values of light characteristics reflected from the road surface, excluding the luminance coefficient and reduced luminance coefficient values, which can be determined at a relatively low level of accuracy, which significantly increases the universality of the measurement method and decreases measurement capacity. Next, the holder and the sensor are removed from the measuring point of the measuring grid on the road surface and a bundle of light rays at the adjusted measurement conditions of lighting and free from the effects of external influences is directed to the measuring point on the surface of the road surface being measured, and from this surface, as a result of the impact of the bundle of light rays free from the impact of external influences to the sensing element of the luminance meter, the measured values of the lighting characteristics reflected from the surface surrounding the measuring point on the surface of the road surface are fixed, such as luminance, luminance coefficient, reduced luminance coefficient, colour temperature, chromaticity coordinates and other measure values. These measured values are fixed under the adjusted measurement conditions for measuring the values of light reflected from the surface of the road surface. If a situation should arise where the measurement conditions of the named light values do not comply with the adjusted measurement conditions, then the observation angle of the luminance meter and the distance of the sensor of the luminance meter from the centre of the measured surface (measuring point) are adjusted to ensure this. After adapting the measurement conditions, the measurement data/measured values obtained via measuring are directed into a programme-based calculation model, and the measurement results for the characteristics of light reflected from the surface of the road surface are obtained from the calculation model together with the uncertainty of these results and are presented on an indicating device or on a computer screen.

As the implementation of the method removes the impact the location of the light sources next to the grid of measuring points in the measuring field of the road surface and the light produced by them have on the measurement of the luminance of the road surface, this significantly increases the measurement accuracy of all the characteristics of light reflected from the road surface.

The method also allows measuring the characteristics of light reflected from the surface of the road surface in a situation where the bundle of light rays directed from the light source is perpendicular with the surface of the measurement object. In that case, the position of the centre of the sensor surface is aligned with the measuring point on the road surface in an inclined direction, by swapping the places of the light source assembly and the measuring point position fixator, which in turn increases the universality of the method.

To implement the measurement method, a measurement device is used, which is composed of a curved housing with an open bottom, and a light source assembly and luminance-fixing sensitive element attached to this curved top part at an angle. A curved segment-shaped side panel has been fixed in place on both sides of the housing, two longitudinally and angularly adjustable opposite tubular protective elements have been attached to the inside of the adjustable curved surface part of the housing, which eliminate the impact of external influences, and a third tubular protective element has been rigidly fixed in the symmetry plane of the housing to the inside of the curved housing, which helps eliminate external influences and has a centreline perpendicular to the support surface of the housing. Adjustment of the two tubular protective elements longitudinally and angularly is enabled by the circular grooves passing through the side panels with fastening parts. A luminance meter with an axially adjustable and fixable sensing element is attached to the external end element on one of the tubular protective elements as the luminance-fixing sensitive element. To the external end element of the two other tubular protective elements is attached in an adjustable and fixable way a light source assembly with supply, adjustment and guiding parts, and a position fixator, and to the external surface of the rear side panel are attached two swivel joints with the swivel elements attached to the rotatable holder carrying the sensor of the illuminance meter. Furthermore, the light source assembly, measuring point position fixator, luminance meter, the illuminance meter attachable to the side panel of the measuring instrument housing and the illuminance meter sensor in the holder are connected to a computer with a wire or wirelessly, and the light source assembly and the measuring point position fixator attached in an adjustable and fixable way to the end surfaces of the tubular protective elements are interchangeable.

By enabling the adjustability of the two tubular protective elements longitudinally and at an angle, the necessary adjustment of the measurement conditions for the lighting characteristics directed to the road surface as well as the characteristics of light reflected from this surface is achieved, which increases the universality of the measurement device, reduces measurement capacity and enables more accurate fixing of the obtained measured values.

By attaching the rotatable holder carrying the illuminance meter sensor to the side panel of the measurement device housing, constant control over the adjustment of the measurement conditions for illuminance and values related to it is achieved, which increases the accuracy of the fixed reference values and thus also the accuracy of the measurements of the characteristics of light reflected from the road surface.

Connecting the light source assembly, measuring point position fixator, luminance meter, the illuminance meter attachable to the side panel of the measurement device housing and the sensor of the illuminance meter to a computer significantly reduces the time the measurement device requires for measuring, facilitates managing the measurement procedure, performs necessary calculations and other necessary operations related to measuring, which in turn reduces measurement capacity and increases universality.

### Brief description of drawings

The functioning of the method according to the present invention and the construction of the device realising its functioning are explained in the description with reference to the following figures, wherein
Figure 1 shows the conceptual operating scheme of the measurement method for values characteristic of reflection of light on a surface.
Figure 2 shows a front view of a measurement device for measuring values characteristic of reflection of light on a surface in a situation where the method is being applied.
Figure 3 shows a front view of the measuring instrument of figure 2 in an enlarged form (luminance meter 13 has been removed, which is why the contours of the luminance meter have been depicted with a thinner line).
Figure 4 shows the front view of the measurement device according to the invention with a half-section and the holder lowered.
Figure 5 shows a section of the measurement device along line A-A on figure 4.
Figure 6 shows the rear view of the measurement device with the holder raised.
Figure 7 shows the graphic presentation of the dependence between the road surface luminance values obtained from measuring the luminance of different road surfaces with the help of the device (prototype of the device) and colour temperature.

### Detailed description of the embodiment

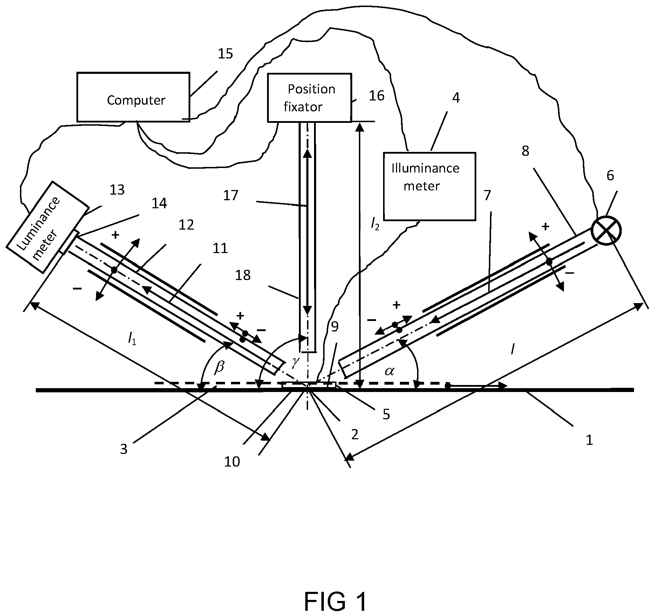

The conceptual operational scheme of the measurement method according to the invention shown in Figure 1 consists of the following: measurement object, which is the road surface 1, measuring point 2 of the measuring field grid formed on the surface of the road surface, holder 3, illuminance meter 4, sensor 5 of the illuminance meter 4, light source 6, bundle of light rays 7, first tubular protective element 8, surface 9 of sensor 5, surface 10 surrounding the measuring point 2 on the surface of the road surface 1 used for measuring luminance, to which a bundle of light rays 7 is directed and which is touchable when measuring luminance, bundle of light rays 11 reflected from the surrounding surface 10, second tubular protective element 12, luminance meter 13, sensing element 14 of the luminance meter 13, computer 15, position fixator 16 of the measuring point 2, third tubular protective element 18 used for attaching the position fixator 16 and directing the beam of touch 17, wherein the beam of touch 17 is directed perpendicularly to the surface 10 surrounding the measuring point 2. The bundle of light rays 7 of the light source 6 depicted on the scheme is directed to the measuring point 2 at an angle *α*, luminance of the light reflected from the surface 10 surrounding the measuring point 2 is viewed at an angle *β* based on the bundle of light rays 11 and the accurate fixation of the position of the centre of the surface 9 of the sensor 5 of the illuminance meter 4 is checked and specified upon adjusting the measurement method as well as upon measuring the values characteristic of the luminance of the surface 10 surrounding the measuring point on the road surface 1 (in that case, the feature being fixed is the position of the measuring point 2 on the road surface 1 at the angle *γ* in the direction of the beam of touch 17). The light source 6 is attached at a distance *l* from the measuring point 2 on the road surface 1, the sensing element 14 of luminance meter 13 is at a distance *l*₁ from the measuring point 2 and the distance of the beam of touch 17 of the position fixator 16 from the surface 10 surrounding the measuring point on the road surface 1 is *l*₂. For controlling the measurement operation according to the presented method and processing the received measured values, the illuminance meter 4, sensor 5 of the illuminance meter 4, light source 6, luminance meter 13 and position fixator 16 can be connected to a computer 15 by a wire or wirelessly. If necessary, the method also allows to switch the positions of the light source 6 and the position fixator 16.

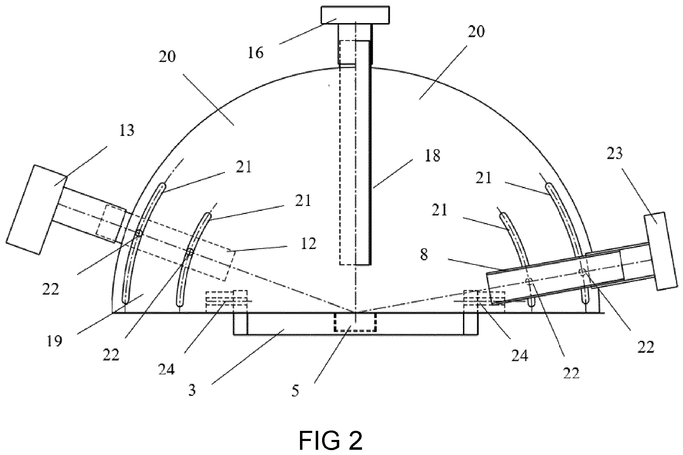

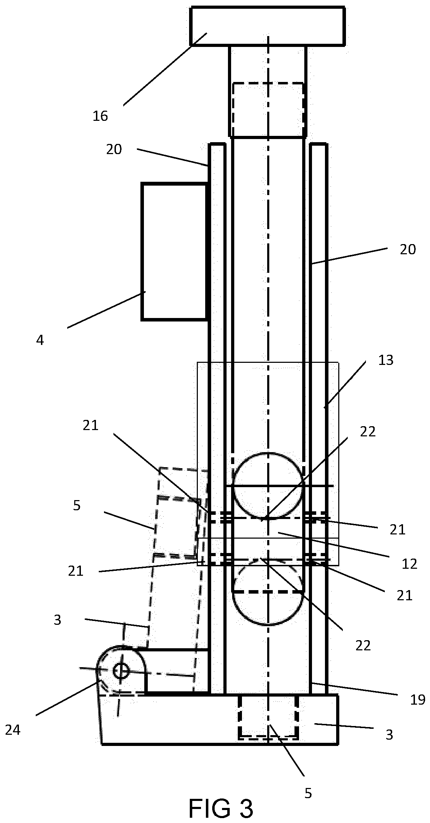

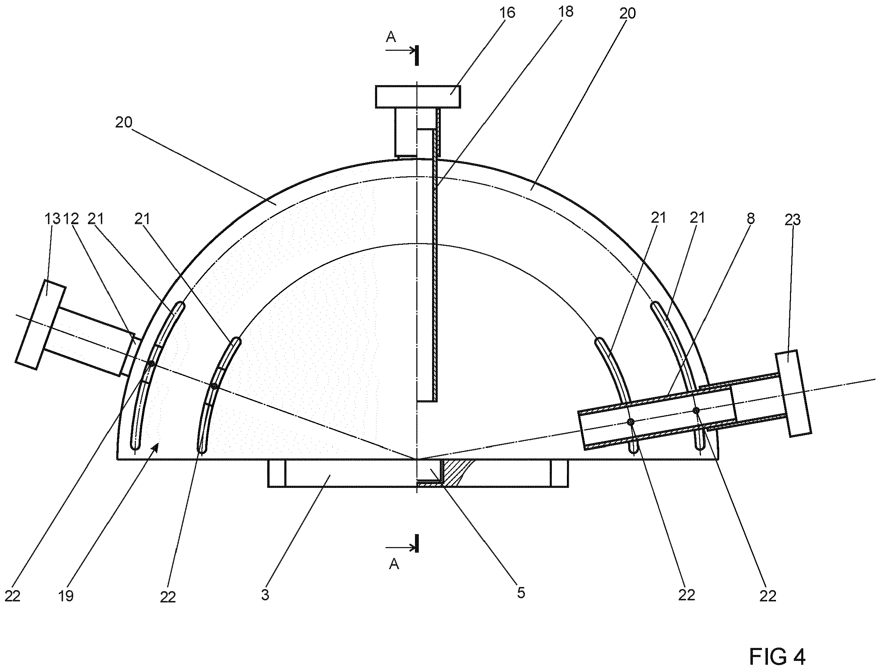

The measurement device presented in figure 2 or 4 consists of the following components: holder 3; sensor 5; housing 19, which consists of two parallel segment-shaped side panels 20, between which are attached, on opposite sides, the first and second tubular protective element 8, 12 that are longitudinally and angularly adjustable, and in the transverse direction, a third tubular protective element 18, which is fixed in place and perpendicular with the lower end surface of the housing 19; the longitudinal and angular adjustment of the first and second tubular protective elements 8 and 12 is enabled by circular grooves 21 formed in the side panels 20 passing through the side panels 20 together with fastening parts or mounting members 22; assembly 23 of the light source 6 with feed, adjustment and guiding parts; a luminance meter 13 and a position fixator 16, which are respectively attachable to the external end elements of the tubular protective elements 8, 12 and 18 with the possibility of axial adjustment and fixing thanks to a transition fit; two swivel joints 24, which are fixed to the outer surface of one of the side panels 20 of the housing 19, e.g., in Figure 3, this is the left side panel 20, and the swivel elements of these joints are fixed to the rotatable holder 3 carrying the sensor 5.

Figure 3 consists of the following components: housing 19 composed of two side panels 20 (on the figure, the left side panel and right side panel), tubular protective element 12 fixed between the side panels, grooves 21 passing through the side panels 20 together with fastening parts 22 enabling the adjustment and fastening of the tubular protective element 12, illuminance meter 4 and swivel joints 24 fixed to the outer surface of one side panel 20 (on the figure, the left side panel). In figure 3, the solid line denotes the position of the sensor 5 holder 3 during the adjustment of the measuring instrument (adjustment of the measurement method), and the dashed line denotes the position of the holder 3 carrying the sensor 5 of the illuminance meter 4 with the help of swivel joints 24, the position being fixed for the duration of measuring the values characteristic of the reflection of light on the surface of the road surface 1 (see figure 1) after the measuring instrument is adjusted for taking measurements.

The measurement method for values characteristic of the reflection of light on a surface is performed with the device as follows.

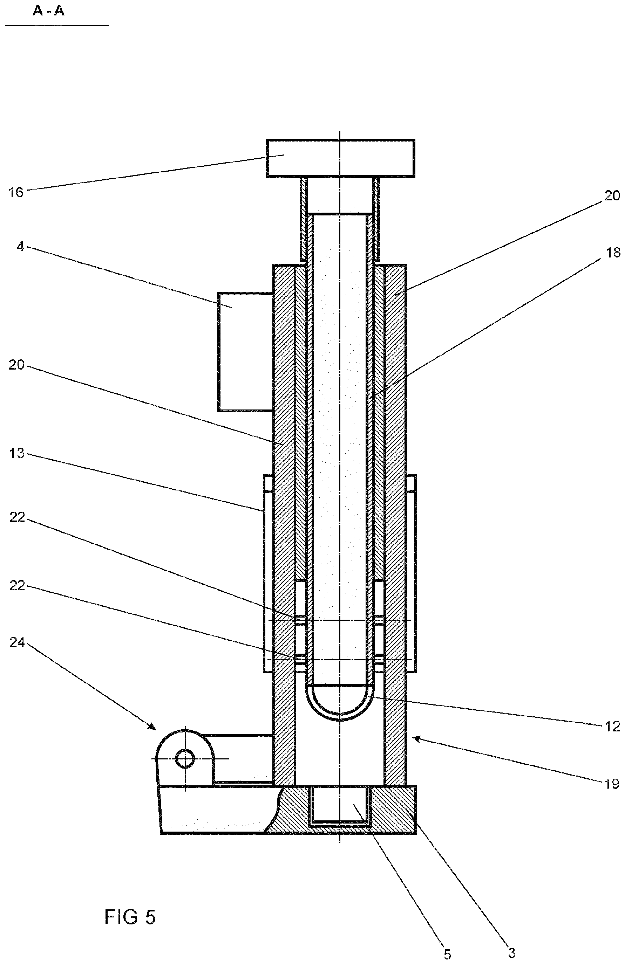

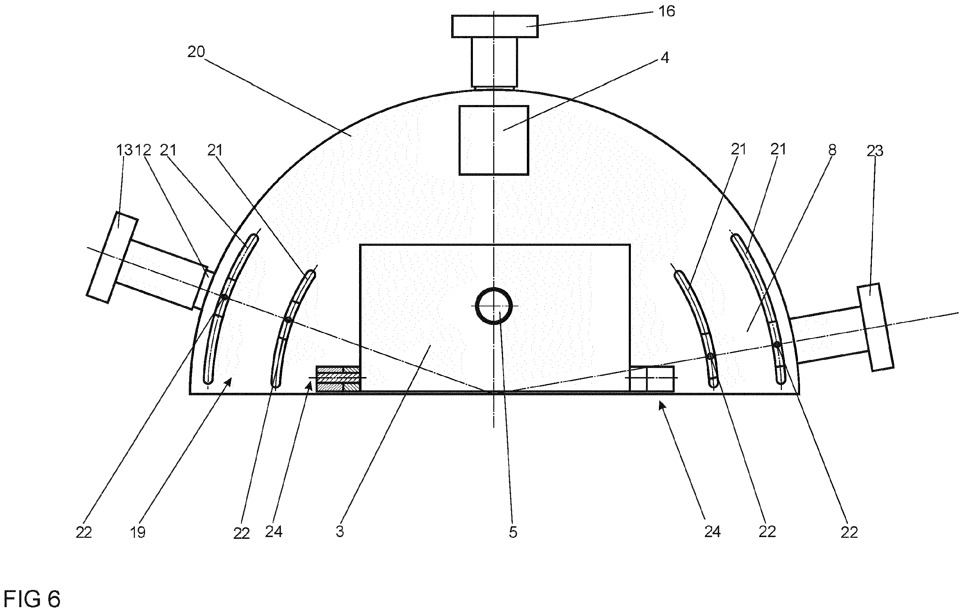

Swivel joints 24 are fixed to the bottom part of one of the side panels 20 (on figure 3, the left side panel) of the device housing 19, which allow the holder 3 of the sensor 5 of the illuminance meter 4 to be rotated from being supported on the measuring instrument to the bottom end surfaces of the side panels 20 of the measuring instrument housing 19 and be fixed to this position, as shown in figures 2 and 3. After fixing the holder 3, the measuring instrument, being supported with the lower end surfaces of the side panels 20 to the upper surface of the holder 3, is lifted to the measuring point 2 of the grid on the surface of the road surface 1, so that the lower surface of the holder 3 lies on top of the road surface 1 and the centre of the surface 9 of the sensor 5 is aligned with the measuring point 2 on the road surface 1, after which the setup of the measuring instrument, i.e., the adjustment of the measurement method for light characteristics, commences. The centreline of the first tubular protective element 8 is set at the angle *α* in relation to the surface of sensor 5 and the distance *l* of the light source 6 of the assembly 23 from the centre of the surface 9 of sensor 5 is set, whereafter the named values are fixed. In the assembly 23, the calibrated light source 6 is switched on, which has a stabilisation time for conducting measurements that is known, and the warming of the assembly 23 of the light source 6 is taken into account. Next, light (bundle of light rays 7) from the light source 6, e.g., a calibrated spectral distribution (LED) light source, which has an adjustable luminous flux, and which is itself replaceable, is now directed to the surface 9 of sensor 5 at the angle *α* from the distance *l*, which by calculations, corresponds to the measurement conditions of lighting. Then, the illuminance, spectral distribution and the colour temperature of light on the surface 9 of the sensor 5 are measured with the illuminance meter 4, e.g., a spectral illuminance meter (lux meter), attached to the outer surface of one of the side panels 20 (on figure 3 or 5, the left side panel) of the measuring instrument 19 protected from external influences as the bottom end surfaces of the side panels 20 of the measuring instrument housing 19 are also tightly against the upper surface of the holder 3, and the obtained values are fixed. Based on these values, the lighting measurement conditions of the method according to the invention are checked. If compliance has been ensured according to the fixed values, the measured values of light characteristics are taken as reference values. If compliance of the measurement conditions is not satisfactory, the method is applied again, i.e. new adjustment of the measuring instrument, based on which the angle *α* of the bundle of light rays 7 (angle *α* of the centreline of the tubular protective element 8) and the distance *l* of the light source 6 of assembly 23 is changed to the extent appropriate, as a result of which, as accurate lighting measurement conditions of the surface of the road surface as possible are assured according to the real conditions of the road surface. Based on the measured values obtained thereafter, the values for illuminance, spectral distribution and colour temperature of light directed to the surface 9 of the sensor 5, which during measurement is the surface 10 surrounding the measuring point 2 on the road surface 1, are determined with the output device of the illuminance meter 4 or a computer 15, and these values are taken as reference values, which are taken into account for measurements and which are the basis for measuring the values characteristic of the reflection of light directed to the surface 10 surrounding any measuring point 2 of the grid on the road surface 1. Measurement device is lifted, the holder 3 is released and swivelled together with the sensor 5 with the help of swivel joints 24 against the back panel 20 of the measuring instrument housing 19 and is fixed to this position (see figure 3 and 6). The measuring instrument is then placed back above the measuring point 2 of the grid on the road surface 1, supported on the bottom end surfaces of the side panels 20, and the light (bundle of light rays 7) separated through the tubular protective element 8 from the light source 6 of the assembly 23 is now directed to the surface 10 surrounding the measuring point 2 of the grid on the road surface 1, and the values characteristic to reflection are now going to be probed by the luminance meter 13, e.g., spectroradiometric luminance meter. The direction, i.e., adjusted angle of observation, of the luminance meter 13 in relation to the road surface 1 is *β*. Thus, the reflection of the light produced from the surface 10 as a bundle of light rays 11 through the tubular protective element 12, which eliminates the impact of external influences, is fixed by the sensing element 14 of the luminance meter 13 under the observation angle *β*, which is usually, but may not be precisely equal to the angle *α* adjusted for measuring lighting. If the luminance measurement conditions are insufficient, then in order to ensure the measurement conditions are as accurate as possible, the observation angle *β* of the luminance meter 13 or the distance *l*₁ of the sensing element 14 of the luminance meter 13 from the centre of the sensor 5 surface is changed to the extent appropriate, if necessary. However, if the adjustment is in accordance with luminance measurement, the measured values of light reflected from the surface 10 surrounding the surface of the road surface 1 obtained by the luminance meter 13 are transferred by wires or wirelessly to a computer 15. In the computer 15, using the respective programme JETI LiVal^{®} (https://www.jeti.com/cms/index.php/jeti-software/lival) for radiometric datalmeasured values, the values characteristic of reflection of light on the road surface, such as luminance, luminance coefficient, reduced luminance coefficient, colour temperature, chromaticity coordinates, spectral distribution of reflected light or other values characteristic to luminance, final measurement results and the uncertainty of these results are obtained in accordance with the measurement task given.

Furthermore, using the measuring device, the measurement method allows to fix precisely and also adjust the position of the centre of the surface 9 of the sensor 5 of the illuminance meter 4 upon setting up the measuring instrument, adjusting the measurement conditions for light characteristics, before measuring and after swivelling the holder 3 in the measuring instrument with the help of the swivel joints 24, the precise position of the measuring point 2 and its alignment with the bundle of light rays 11, but also with the centreline of the tubular protective element 12, and the intersection point with the surrounding surface 10 with the help of the position fixator 16 removably attached to the third tubular protective element 18 of the measuring instrument, from the top of the third tubular protective element 18 removing the impact of external influences at the angle yin relation to the beam of touch 17 and the surface 10 surrounding the measuring point of the road surface 1 or perpendicularly, i.e., at a 90-degree angle or close to it, with the bottom end surfaces of the side panels 20 of the measuring instrument housing 19. If the values characteristic of the light reflected have been measured in the first measuring point 2 on the road surface 1, the device is moved to a following random measuring point 2 on the road surface 1 grid. To a side panel 20 of the device housing 19 has been attached a rotatable holder 3 with the sensor 5 of the illuminance meter 4 by swivel joints 24, such that when setting up the measuring instrument, adjusting the measurement conditions, the surface 9 of the sensor 5 when measuring with this instrument aligns with the surface 10 surrounding the measuring point 2 on the road surface 1. As the random measuring point 2 on the road surface 1 grid is on the same plane as the surface 9 of the sensor 5 as during the previous adjustment of the method, the position fixator 16 can easily be used to align the position of the centre of the sensor 5 when setting up the measuring instrument with the position of the random measuring point 2 on the road surface 1 when measuring with the measuring instrument.

In each following random measuring point 2 on the road surface 1 grid, the measurement of the values characteristic to the reflection on the surface with an already set up measuring instrument, under adjusted measurement conditions, is performed without any setting or adjustment operations, similarly to the above, wherein the exact position of the random measuring point 2 on the road surface 1 grid is fixed with the position fixator 16. This is how the values characteristic to reflection of the surface are measured in all measuring points 2 on the road surface 1 grid.

If there is a need for measuring values characteristic of the reflection of light on a surface in a situation where light is directed only perpendicularly with the road surface 1 being measured, then this situation can be solved with the measuring instrument by switching the positions of the assembly 23 with the light source 6 and the position fixator 16 (see figure 2). Next, similarly to the above, the measuring instrument is set up, measurement conditions are applied, with the sensor 5 of the illuminance meter 4, by directing the light from the light source 6 perpendicularly with the surface 9 of the sensor 5 and performing the measurement of illuminance perpendicularly to the surface 9 of the sensor 5 with adjusting the distance of the light source 6 and the luminous flux. In this case, after the measuring instrument is set up, measurement conditions are applied, the measurement of the values characteristic to the reflection of light on the road surface 1 is performed similarly to the above, except that fixing the position of the centre of the surface 9 of the sensor 5 during user adjustments, applying measurement conditions, and fixing the measuring point 2 on the road surface 1 during measurement with the measuring instrument are now performed in an inclined position, at the angle *α*.

A holder 3 with the sensor 5 of the illuminance meter 4, that can be swivelled, is fixed to the lower part of the measuring instrument housing 19 in such a way that when setting up the measuring instrument, the surface 9, when measuring with the measuring instrument, aligns with the surface 10 surrounding the measuring point 2 on the road surface 1. After checking the measurement conditions, the sensor 5 and the holder 3 can be swivelled to the side via the swivel joints 24 for the duration of the measuring, and after that, the lower part of the device housing 19 will be supported on the surface 10 surrounding the measuring point on the road surface 1 and the previous performance of device adjustment, application of measurement conditions, remains valid.

The new measurement method and device according to the present invention developed for values characteristic of the reflection of light are one way of realising the above. Furthermore, the developed invention enables getting new reliable values for the values characteristic of the luminance (reflection of light) of modern road surfaces, such as luminance coefficient, reduced luminance coefficient, colour temperature and chromaticity coordinates, at the same time enabling the monitoring of all measurement results of values characteristic to luminance.

The effect of using the method and device is, that resulting from its application, for example in case of asphalt surfaces of modern roads, which have traditional gas-discharge lighting or lighting solutions already based on the modern LED technology, it is possible to operationally evaluate changes in values characteristic to reflection of light in case of changes arising from the wearing of surfaces and the environment, and to propose safer and more effective solutions depending on changes in the traffic environment.

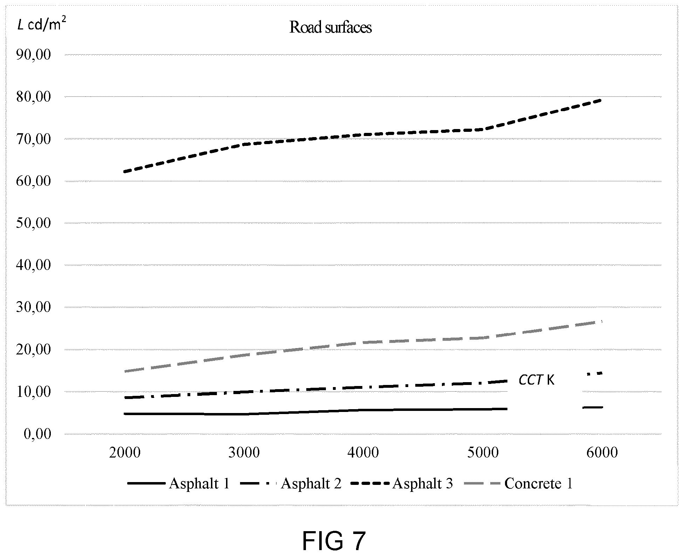

The effect of the measurement method and device according to the present invention is also that resulting from their application, the human scotopic and mesopic vision in a dark and dim environment will be taken into account, which has thus far not been implemented, and it is possible to really evaluate the values characteristic to the reflection of light on road surfaces in the case of lighting solutions based on LED technology used for lighting modern roads, and in the case of modern asphalt and concrete surfaces and different additives used in them. The application of the method takes into account the spectral composition of visible light or the effect of colour temperature on the assessment of the reflection of light from the surfaces, thereby offering safer and more efficient solutions for the traffic environment. Thus, according to the experiment performed using the measurement method and device (prototype of the device) for values characteristic of the reflection of light on a surface, different road surfaces have been evaluated, where if the light falling to the surface has an illuminance of 20 lx, the luminance of light reflected from the same surface has the different values of colour temperature shown on the diagram in figure 7.

As the measurement method according to the invention for values characteristic of the reflection of light on a surface is simple and the mobile device used for its application can be used to measure on site, at the measuring point of the measurement grid defined for the road surface, the lighting characteristics reflected directly from the surface of the road surface surrounding this point and the diversity of these values, then this allows to reduce measurement capacity and increase measurement accuracy. The above is also supported by a comparative analysis of the measurement of values characteristic of reflection of light on road surfaces performed with the currently used standard measurement method for road surfaces and the measuring instruments in regular use, as well as with the measurement method and device (prototype of the device) presented in the description of the invention, in terms of some characteristics, which have been presented in the following table.

The table presents a comparative analysis of the measurement of values characteristic of the reflection of light performed with the measurement methods and measuring instruments for road surfaces in regular use and with the measurement method and device (prototype of the device) presented in the description of the invention.

| Used measurement method | Values characteristic of reflection of light on the road surface | | | | | | | | |
|---|---|---|---|---|---|---|---|---|---|
| | Illuminance | | Luminance | | Luminance coefficients | | Colour temperature | | Chromaticity coordinates |
| Measurement methods of EN 13201-3 and EN 13201-4 | Measurable by lux meter with V-lambda correction | | Measurable by luminance meter placed on a tripod | | Calculable using data from the example of the luminance meter and lux meter and data presented in the standard | | Measurable by colour temperature meter | | Chromaticity coordinates of light cannot be measured |
| Measurement method according to the invention | All values characteristic of reflection of light on the road surface are measurable and calculable | | | | | | | | |

| Used measuring instruments | Time required for measuring the values characteristic of reflection of light on the road surface and for calculating their values depends on the time specified in the manual of the used measuring instrument for performing the measurement procedure | | | | | | | | |
|---|---|---|---|---|---|---|---|---|---|
| | Illuminance | | Luminance | | Luminance coefficients | | Colour temperature | | Chromaticity coordinates |
| Measuring instruments in regular use | Lux meter with spectrometric component BTS256 EF | | Spectroradiometer with spectrometric component JETI specbos 1211UV | | Calculable using data from the example of the luminance meter and lux meter and data presented in the standard | | Spectroradiometer with spectrometric component JETI specbos 1211UV | | Spectroradiometer with spectrometric component JETI specbos 1211UV |
| Measuring device according to the invention | All values characteristic of reflection of light on the road surface are measurable and calculable within 2 hours | | | | | | | | |

| Used measurement method | The average achievable value of the expanded uncertainty of the measurement and calculation results of the values characteristic of reflection of light on the road surface in per cents from the measurement or calculation results at a level of probability of 95% (the achievable value of the expanded uncertainty of colour temperature and chromaticity coordinates is given with a unit of measurement) | | | | | | | | |
|---|---|---|---|---|---|---|---|---|---|
| | Illuminance | Luminance | | Luminance coefficient | | Reduced luminance coefficient | | Colour temperature | Chromaticity coordinates |
| Measurement method of EN 13201-3 and EN 13201-4 | 10 | 15 | | 18 | | 20 | | | |
| Measurement method according to the invention | 5 | 10 | | 12 | | 12 | | 100 K | 0.001 |

As seen from the data in the table, the method and device according to the present invention help increase measurement accuracy. For the standard measurement method, the table includes data for the average value of the expanded uncertainty of the measurement result obtained at the measuring point on the road surface in per cents from the measurement result (Mõõtetulemuse määramatuse hindamise lähendmeetod valgustehnilistel mõõtmistel. TTÜ, Inseneriteaduskond, Tallinn, 2019). It turns out that approximately 1/3 of the expanded uncertainty value presented using the standard measurement method is composed of uncertainty components arising from external influences. As the described new measurement method of the invention enables to minimise the proportion of external influences, this allows to significantly reduce the expanded uncertainty of the results from the measurement of lighting characteristics of the road surface (values characteristic to reflection). The possible average values of the expanded uncertainties of the measurement results obtained by using the measurement method according to the present invention presented in the table were confirmed as a result of testing the prototype of the device used for realising the measurement method.

### List of details

- 1: - road surface (pavement *in American English*)
- 2: - measuring point of the grid
- 3: - holder
- 4: - illuminance meter; lux meter
- 5: - sensor
- 6: - calibrated light source
- *l*: - distance between the light source and the centre of the sensor surface
- 7: - bundle of light rays from a light source
- 8: - first tubular protective element
- *α*: - angle of the centreline of the tubular protective element compared to the surface of the sensor
- 9: - sensor surface
- 10: - surface surrounding the measuring point on the road surface
- 11: - bundle of light rays reflected from the surface of the road surface
- 12: - second tubular protective element
- 13: - luminance meter
- 14: - sensing element of the luminance meter
- *l*₁: - distance between the luminance meter sensing element and the centre of the sensor surface
- *β*: - direction of the luminance meter in relation to the surface of the road surface, angle of observation of the luminance meter
- 15: - computer
- 16: - position fixator, positioner
- 17: - beam of touch or surface scanning ray or tactile beam
- 18: - third tubular protective element
- *γ*: - angle between the beam of touch and the road surface
- *l*₂: - distance of the position fixator's beam of touch from the road surface surrounding the measuring point on the road surface
- 19: - housing of the measuring instrument or measuring instrument body
- 20: - side panels; on Figure 3, left side panel and right side panel
- 21: - circular grooves passing through the side panels
- 22: - fastening parts or mounting members
- 23: - set of assembled parts or assembly
- 24: - swivel joints or pivoting hinges

## Claims

1. A method of measurement of characteristic quantities of reflection of light on a road surface (1), according to which method a luminous flux from a light source (6) is directed at an angle *α* to the road surface (1), after which the luminance of the light reflected from the road surface (1) is measured at an angle *β*, and based on the data obtained, a luminance coefficient and a reduced luminance coefficient are calculated, wherein the method comprises the steps:
a. before directing light from the light source (6) to the road surface (1) in order to obtain said data, measurement lighting conditions are adjusted, pursuant to which
i. a bundle of light rays (7) from the light source (6) shielded from external influences by a protective tubular element (8) is directed at an angle *α* to the surface of a sensor (5) of a calibrating illuminance meter (4) placed at a measuring point (2) on the road surface (1),
ii. a position of a centre of a surface (9) of the sensor (5) is aligned with the measuring point (2) of the road surface (1),
iii. a luminous flux of the light source (6), the falling angle *α* of the bundle of light rays (7) of the light source (6) and a distance *l* between the light source and the centre of the sensor (5) surface are adjusted,
iv. lighting measurement conditions are ensured, and then, the values obtained for the illuminance, spectral distribution of light and colour temperature on the surface of the sensor (5) are taken as reference values. Thereafter
b. the bundle of light rays (7) from the light source (6) from influences is directed, according to the adjusted measurement lighting conditions, to the measuring point (2) on the road surface (1) from the light source (6), and
c. as a result of the impact of the bundle of light rays free from the influences quantities of reflection of light on the road surface (1), under the luminance measurement conditions adjusted for a sensing element (14) of an luminance meter (13), measured characteristic quantities of reflection of light on the road surface (1) surrounding the measuring point (2) on the road surface (1) are fixed. Thereafter
d. the measured quantity values are transferred to a programme-based calculation model and the measurement results for characteristic quantities of reflection of light on road surface (1) are obtained from the calculation model together with the uncertainty of the results, results are presented on an indicating device or a computer screen.

2. The method according to claim 1, wherein in step c) before obtaining the measured quantity values of reflection of light on the road surface (1), luminance measurement conditions are adjusted, if needed, which means that the angle of observation 6 of the luminance meter (13) and the distance *l*₁ between the sensing element (14) of the luminance meter (13) and the measuring point (2) on the road surface (1) are adjusted.

3. A device for measurement of characteristic quantities of reflection of light on a road surface by a method according to claim 1 or 2, the device comprises a curved measuring instrument housing (19) open from the bottom and an assembly (23) of a light source (6) attached to its surface and positioned at the angle *α*, and an element (13) fixing luminance, wherein the housing (19) comprises curved segment-shaped side panels (20) fixed in place on both sides thereof between a top curved surface and the bottom, wherein from the curved surface to the inside of the housing (19) are adjustably attached first and second tubular protective elements (8) and (12) opposite each other and being adjustable in the direction of angle α and angle *β* and in terms of distance *l* and *l*₁, respectively, to enable setting of the distances from the measurement point (2) of the bottom surface to the light source (6) and luminance meter (13) respectively, wherein their adjustment longitudinally and at the angles *α* and *β*, respectively, is enabled due to circular grooves (21) passing through the side panels (20) with fastening parts (22), and a third tubular protective element (18) fixed in place from the curved surface to the inside of the housing (19) in the symmetry plane of the housing (19), its centreline (17) being perpendicular with the supporting bottom of the housing (19), wherein the luminance-fixing element (13) is a luminance meter (13) with an axial adjustment and fixing possibility attached to the outer end element of the second tubular protective element (12), and to the outer end element of the third and first tubular protective elements (18) and (8), respectively, a position fixator (16) and a light source (6) assembly (23) with feed, adjustment and guiding parts are attached in an adjustable and fixable way, and a sensor (5) of a calibrating illuminance meter (4) held in a rotatable holder (3), which is fixed via a swivel joint (24) to the external surface of one side panel (20) so as to permit the sensor (5) to be rotated into position at the measurement point (2) for carrying out the step of the adjustment of the measurement lighting conditions.

4. The device according to claim 3, wherein the light source assembly (23), measuring point position fixator (16), luminance meter (13), illuminance meter (4) attached to one of the side panels (20) of the measuring instrument housing (19) and the sensor (5) of the illuminance meter are connected by a wire or wirelessly to a computer (15).

5. The device according to claim 3, wherein the light source (6) assembly (23) and the measuring point (2) position fixator (16) attached in an adjustable and fixable way to the end surfaces of the first and third tubular protective elements (8) and (18), respectively, are interchangeable.

## Patentansprüche

1. Verfahren zur Messung von charakteristischen Reflexionseigenschaften von Licht auf einer Straßenoberfläche (1), bei dem ein Lichtstrom von einer Lichtquelle (6) unter einem Winkel α auf die Straßenoberfläche (1) gerichtet wird, wobei anschließend die Leuchtdichte des von der Straßenoberfläche (1) reflektierten Lichts unter einem Winkel β gemessen wird, und basierend auf den erhaltenen Daten ein Leuchtdichtekoeffizient und ein reduzierter Leuchtdichtekoeffizient berechnet werden, wobei das Verfahren die Schritte umfasst:
a. Vor der Ausrichtung des Lichts von der Lichtquelle (6) auf die Straßenoberfläche (1) zur Gewinnung dieser Daten werden Messbeleuchtungsbedingungen eingestellt, gemäß denen
i. Ein Lichtstrahlenbündel (7) von der Lichtquelle (6), das von einem schützenden Rohrelement (8) vor externen Einflüssen abgeschirmt wird, unter einem Winkel α auf die Oberfläche eines Sensors (5) eines Kalibrierungsbeleuchtungsmessgeräts (4) gerichtet wird, das am Messpunkt (2) auf der Straßenoberfläche (1) platziert ist,
ii. Eine Position der Mitte einer Oberfläche (9) des Sensors (5) mit dem Messpunkt (2) auf der Straßenoberfläche (1) ausgerichtet wird,
iii. Ein Lichtstrom der Lichtquelle (6), der einfallende Winkel α des Lichtstrahlenbündels (7) von der Lichtquelle (6) und der Abstand / zwischen der Lichtquelle und der Mitte der Sensoroberfläche (5) eingestellt werden,
iv. Beleuchtungsmessbedingungen sichergestellt werden und anschließend die erhaltenen Werte für die Beleuchtungsstärke, die spektrale Lichtverteilung und die Farbtemperatur auf der Oberfläche des Sensors (5) als Referenzwerte übernommen werden. Danach
b. Das Lichtstrahlenbündel (7) von der Lichtquelle (6), frei von Einflüssen, wird gemäß den eingestellten Messbeleuchtungsbedingungen auf den Messpunkt (2) auf der Straßenoberfläche (1) von der Lichtquelle (6) gerichtet, und
c. Als Ergebnis des Einflusses des von den Einflüssen befreiten Lichtstrahlenbündels werden Reflexionseigenschaften von Licht auf der Straßenoberfläche (1) unter den für ein Sensorelement (14) eines Leuchtdichtemessgeräts (13) eingestellten Leuchtdichtemessbedingungen gemessen und die gemessenen charakteristischen Reflexionsgrößen des Lichts auf der Straßenoberfläche (1), die den Messpunkt (2) auf der Straßenoberfläche (1) umgeben, werden fixiert. Danach
d. Werden die gemessenen Mengenwerte einem programmgestützten Berechnungsmodell übertragen und die Messergebnisse für charakteristische Reflexionseigenschaften von Licht auf der Straßenoberfläche (1) werden aus dem Berechnungsmodell zusammen mit der Unsicherheit der Ergebnisse erhalten, und die Ergebnisse werden auf einer Anzeigevorrichtung oder einem Computerbildschirm präsentiert.

2. Das Verfahren nach Anspruch 1, bei dem in Schritt c) vor dem Erhalten der gemessenen Mengenwerte der Lichtreflexion auf der Straßenoberfläche (1) bei Bedarf Leuchtdichtemessbedingungen eingestellt werden, was bedeutet, dass der Beobachtungswinkel β des Leuchtdichtemessgeräts (13) und der Abstand *l*₁ zwischen dem Sensorelement (14) des Leuchtdichtemessgeräts (13) und dem Messpunkt (2) auf der Straßenoberfläche (1) eingestellt werden.

3. Vorrichtung zur Messung von charakteristischen Reflexionseigenschaften von Licht auf einer Straßenoberfläche nach einem Verfahren gemäß Anspruch 1 oder 2, wobei die Vorrichtung ein gekrümmtes Messgerätegehäuse (19) umfasst, das von unten offen ist, und eine Anordnung (23) einer Lichtquelle (6), die an seiner Oberfläche angebracht ist und unter dem Winkel α positioniert ist, sowie ein Element (13) zur Festlegung der Leuchtdichte, wobei das Gehäuse (19) gekrümmte segmentförmige Seitenpaneele (20) aufweist, die zwischen einer oberen gekrümmten Oberfläche und dem Boden fest angeordnet sind, wobei vom gekrümmten Boden bis zur Innenseite des Gehäuses (19) einstellbar erste und zweite tubuläre Schutzelemente (8) und (12) einander gegenüberliegend und in Richtung des Winkels α und des Winkels β sowie in Bezug auf die Abstände / und *l*₁ angebracht sind, um die Abstände vom Messpunkt (2) der Bodenfläche zur Lichtquelle (6) bzw. zum Leuchtdichtemessgerät (13) einzustellen, wobei ihre Einstellung längs und in den Winkeln α und β ermöglicht wird, da sie durch kreisförmige Nutungen (21) durch die Seitenpaneele (20) mit Befestigungsteilen (22) geführt werden, und ein drittes tubuläres Schutzelement (18) vom gekrümmten Boden bis zur Innenseite des Gehäuses (19) in der Symmetrieebene des Gehäuses (19) fest angeordnet ist, wobei seine Mittellinie (17) senkrecht zur Tragfläche des Gehäuses (19) steht, wobei das Leuchtdichtefixierelement (13) ein Leuchtdichtemessgerät (13) mit einer axialen Einstellungs- und Fixierungsmöglichkeit ist, das am äußeren Endelement des zweiten tubulären Schutzelements (12) befestigt ist, und an den äußeren Endelementen des dritten und ersten tubulären Schutzelements (18) bzw. (8) sind ein Positionsfeststeller (16) und eine Lichtquellenmontage (23) mit Zuführungs-, Einstellungs- und Führungsteilen auf eine verstellbare und fixierbare Weise angebracht, und ein Sensor (5) eines kalibrierenden Beleuchtungsstärkemessgeräts (4), der in einem drehbaren Halter (3) gehalten wird, der über ein Schwenkgelenk (24) mit der Außenfläche eines Seitenpaneels (20) verbunden ist, so dass der Sensor (5) in die Position gedreht werden kann, in der der Messpunkt (2) für die Durchführung des Schritts zur Einstellung der Messbeleuchtungsbedingungen liegt.

4. Die Vorrichtung nach Anspruch 3, wobei die Lichtquellenmontage (23), der Messpunkt-Positionsfeststeller (16), das Leuchtdichtemessgerät (13), das an einem der Seitenpaneele (20) des Messgerätegehäuses (19) angebracht ist, sowie der Sensor (5) des Beleuchtungsstärkemessgeräts per Kabel oder drahtlos mit einem Computer (15) verbunden sind.

5. Die Vorrichtung nach Anspruch 3, wobei die Lichtquellenmontage (23) und der Messpunkt-Positionsfeststeller (16) auf eine verstellbare und fixierbare Weise an den Endflächen der ersten und dritten tubulären Schutzelemente (8) bzw. (18) angebracht sind und austauschbar sind.

## Revendications

1. Procédé de mesure de caractéristiques de réflexion de la lumière sur une surface de route (1), selon lequel un flux lumineux provenant d'une source lumineuse (6) est dirigé à un angle α vers la surface de route (1), après quoi la luminance de la lumière réfléchie par la surface de route (1) est mesurée à un angle β, et en fonction des données obtenues, un coefficient de luminance et un coefficient de luminance réduit sont calculés, le procédé comprenant les étapes suivantes:
a. avant de diriger la lumière de la source lumineuse (6) vers la surface de route (1), afin d'obtenir lesdites données, les conditions d'éclairage de mesure sont ajustées, conformément auxquelles
i. un faisceau de rayons lumineux (7) provenant de la source lumineuse (6), protégé des influences externes par un élément tubulaire de protection (8), est dirigé à un angle α vers la surface d'un capteur (5) d'un luxmètre d'éclairement de calibrage (4) placé au point de mesure (2) sur la surface de route (1),
ii. une position du centre d'une surface (9) du capteur (5) est alignée sur le point de mesure (2) de la surface de route (1),
iii. un flux lumineux de la source lumineuse (6), l'angle d'incidence α du faisceau de rayons lumineux (7) de la source lumineuse (6) et la distance 1 entre la source lumineuse et la surface du capteur (5) sont ajustés,
iv. les conditions de mesure d'éclairage sont assurées, puis les valeurs obtenues pour l'éclairement, la distribution spectrale de la lumière et la température de couleur à la surface du capteur (5) sont prises comme valeurs de référence. Ensuite
b. le faisceau de rayons lumineux (7) provenant de la source lumineuse (6), exempt d'influences, est dirigé, conformément aux conditions d'éclairage de mesure ajustées, vers le point de mesure (2) sur la surface de route (1) depuis la source lumineuse (6), et
c. suite à l'impact du faisceau de rayons lumineux exempt d'influences, des caractéristiques mesurées de réflexion de la lumière sur la surface de route (1), dans des conditions de mesure de luminance ajustées pour un élément de détection (14) d'un luminancemètre (13), sont fixées autour du point de mesure (2) sur la surface de route (1). Ensuite
d. les valeurs mesurées sont transférées à un modèle de calcul basé sur un programme et les résultats de mesure pour les caractéristiques de réflexion de la lumière sur la surface de route (1) sont obtenus à partir du modèle de calcul, ainsi que l'incertitude des résultats, les résultats étant présentés sur un dispositif d'indication ou un écran d'ordinateur.

2. Le procédé selon la revendication 1, dans lequel à l'étape c), avant d'obtenir les valeurs mesurées de réflexion de la lumière sur la surface de route (1), les conditions de mesure de luminance sont ajustées, si nécessaire, ce qui signifie que l'angle d'observation β du luminancemètre (13) et la distance 11 entre l'élément de détection (14) du luminancemètre (13) et le point de mesure (2) sur la surface de route (1) sont ajustés.

3. Dispositif de mesure de caractéristiques de réflexion de la lumière sur une surface de route selon un procédé selon la revendication 1 ou 2, le dispositif comprenant un boîtier de mesure incurvé (19) ouvert par le bas et un ensemble (23) comprenant une source lumineuse (6) fixée à sa surface et positionnée à l'angle *α*, et un élément (13) fixant la luminance, le boîtier (19) comprenant des panneaux latéraux en forme de segment courbé (20) fixés en place des deux côtés entre une surface courbée supérieure et le bas, du côté de la surface courbée à l'intérieur du boîtier (19) sont fixés de manière réglable des premier et deuxième éléments tubulaires de protection (8) et (12) opposés l'un à l'autre et réglables dans la direction de l'angle α et de l'angle β et en termes de distance *l* et *l₁,* respectivement, pour permettre le réglage des distances du point de mesure (2) de la surface inférieure vers la source lumineuse (6) et le luminancemètre (13), respectivement, leur ajustement longitudinalement et selon les angles α et β étant rendu possible grâce à des rainures circulaires (21) traversant les panneaux latéraux (20) avec des parties de fixation (22), et un troisième élément tubulaire de protection (18) fixé en place de la surface courbée à l'intérieur du boîtier (19) dans le plan de symétrie du boîtier (19), sa ligne médiane (17) étant perpendiculaire au fond porteur du boîtier (19), l'élément de fixation de la luminance (13) étant un luminancemètre (13) avec un ajustement axial et une possibilité de fixation attachée à l'élément d'extrémité externe du deuxième élément tubulaire de protection (12), et à l'élément d'extrémité externe du troisième et du premier élément tubulaire de protection (18) et (8), respectivement, un fixateur de position (16) et un ensemble (23) de source lumineuse (6) avec des parties d'alimentation, de réglage et de guidage étant fixés de manière réglable et fixe, et un capteur (5) d'un luxmètre d'éclairement de calibrage (4) maintenu dans un support rotatif (3), qui est fixé via un joint pivotant (24) à la surface externe d'un panneau latéral (20) de manière à permettre au capteur (5) d'être tourné en position au point de mesure (2) pour réaliser l'étape d'ajustement des conditions d'éclairage de mesure.

4. Le dispositif selon la revendication 3, dans lequel l'ensemble de source lumineuse (23), le fixateur de position du point de mesure (16), le luminancemètre (13), le luxmètre d'éclairement (4) fixé à l'un des panneaux latéraux (20) du boîtier de l'instrument de mesure (19) et le capteur (5) du luxmètre d'éclairement sont connectés par câble ou sans fil à un ordinateur (15).

5. Le dispositif selon la revendication 3, dans lequel l'ensemble (23) de source lumineuse (6) et le fixateur de position du point de mesure (16) fixé de manière réglable et fixe aux surfaces d'extrémité des premier et troisième éléments tubulaires de protection (8) et (18), respectivement, sont interchangeables.
